# EUROPEAN PATENT APPLICATION

(11) **EP 4 576 913 A1**
(43) Date of publication of application: **25.06.2025**
(21) Application number: 23870186.6
(22) Date of filing: 05.09.2023
(51) Int. Cl.: H04W 72/541

(54) **METHOD FOR ELIMINATING INTERFERENCE, AND RELATED DEVICE**

(30) Priority: 26.09.2022 CN 202211178525
(71) Applicant: Huawei Technologies Co., Ltd., Shenzhen, Guangdong 518129 (CN)
(72) Inventor: LI, Ke, Shenzhen, Guangdong 518129 (CN); LI, Xiang, Shenzhen, Guangdong 518129 (CN)
(74) Representative: Maiwald GmbH
(86) International application number: PCT/CN2023/116900
(87) International publication number: WO 2024/066946

(57) **Abstract**

Embodiments of this application provide an interference cancellation method and a related device, to improve efficiency of cancelling channel interference between user equipments. The method in embodiments of this application includes: A second UE obtains first signaling information sent by a base station, where the first signaling information includes a PRB bundling size of a first UE and/or first information of the first UE; and the second UE may cancel time-frequency interference from the first UE to the second UE based on the first signaling information, where the first information indicates a number of DMRS CDM groups without data or a ratio of demodulation reference signal EPRE to data EPRE, and the first UE is a paired UE of the second UE. The PRB bundling size of the first UE and/or the first information of the first UE that are/is transferred by using the first signaling information are/is used to cancel the time-frequency interference from the first UE to the second UE. This more efficiently cancels the time-frequency interference from the first UE to the second UE.

## Description

This application claims priority to Chinese Patent Application No. CN202211178525.5, filed with the China National Intellectual Property Administration on September 26, 2022 and entitled "INTERFERENCE CANCELLATION METHOD AND RELATED DEVICE", which is incorporated herein by reference in its entirety.

### TECHNICAL FIELD

Embodiments of this application relate to the wireless communication field, and in particular, to an interference cancellation method and a related device.

### BACKGROUND

With popularization of wireless communication technologies, more user equipments join a wireless network. A number of user equipments increases exponentially, but an increase speed of base stations is far lower than an increase speed of the user equipments. To provide a service for as many user equipments as possible by using a base station with a limited quantity, a skilled person proposes a multi-user multiple-input multiple-output (multi-user multiple-input multiple-output, MU-MIMO) technology, so that one base station simultaneously serves a plurality of user equipments, and the base station simultaneously communicates with the plurality of user equipments by fully using space domain resources of antennas.

In the MU-MIMO technology, data of the plurality of user equipments occupies a same time-frequency resource. Although a throughput of a wireless network system is improved, how to efficiently cancel channel interference between the user equipments becomes a problem that the skilled person needs to face.

### SUMMARY

Embodiments of this application provide an interference cancellation method and a related device, to improve effect of cancelling channel interference between user equipments.

According to a first aspect, an embodiment of this application provides an interference cancellation method. The method includes: obtaining first signaling information, where the first signaling information includes a physical resource block bundling size PRB bundling size of a first user equipment (user equipment, UE) and/or first information of the first UE, and the first information indicates a number of demodulation reference signal code division multiplexing groups without data scheduling (number of DMRS CDM groups without data) or a ratio of demodulation reference signal DMRS EPRE to data EPRE; and cancelling time-frequency interference from the first UE to a second UE based on the first signaling information, where the first UE is a paired UE of the second UE.

In this embodiment of this application, the second UE obtains the first signaling information sent by a base station, where the first signaling information includes the PRB bundling size of the first UE and/or the first information of the first UE. The second UE may cancel the time-frequency interference from the first UE to the second UE based on the first signaling information, where the first information indicates the number of DMRS CDM groups without data or the ratio of the demodulation reference signal (DMRS) EPRE to the data EPRE, and the first UE is a paired UE of the second UE. The PRB bundling size of the first UE and/or the first information of the first UE that are/is transferred by using the first signaling information are/is used to cancel the time-frequency interference from the first UE to the second UE. This more efficiently cancels the time-frequency interference from the first UE to the second UE.

In a possible implementation of the first aspect, if the first signaling information does not include the first information, the cancelling time-frequency interference from the first UE to a second UE based on the first signaling information includes: cancelling the time-frequency interference from the first UE to the second UE based on the PRB bundling size of the first UE and first information of the second UE. In this embodiment of this application, when the first signaling information does not include the first information, the time-frequency interference from the first UE to the second UE is cancelled based on the PRB bundling size of the first UE and the first information of the second UE. The first information is not transferred in the first signaling information, so that content of the first signaling information is reduced, and signaling overheads are reduced.

In a possible implementation of the first aspect, the first information of the first UE is the same as the first information of the second UE. In this embodiment of this application, it is proposed that the first information of the first UE is the same as the first information of the second UE. In a scenario in which the first information of the first UE is the same as the first information of the second UE, the first information of the first UE may be not sent to reduce the first signaling information, so that signaling overheads are reduced.

In a possible implementation of the first aspect, if the first signaling information does not include the PRB bundling size of the first UE, the cancelling time-frequency interference from the first UE to a second UE based on the first signaling information includes: cancelling the time-frequency interference from the first UE to the second UE based on the first information and a PRB bundling size of the second UE. In this embodiment of this application, the first signaling information does not include the PRB bundling size of the first UE. The second UE may cancel the time-frequency interference from the first UE to the second UE based on the first information and the PRB bundling size of the second UE. The first signaling information does not include the PRB bundling size of the first UE, and the time-frequency interference from the first UE to the second UE is cancelled by using the PRB bundling size of the second UE. The PRB bundling size of the first UE is not transferred in the first signaling information, so that the content of the first signaling information is reduced, and signaling overheads are reduced.

In a possible implementation of the first aspect, the first signaling information includes a port number of the first UE and a modulation index of the first UE. In this embodiment of this application, the first signaling information includes the port number of the first UE and the modulation index of the first UE, so that the second UE can more accurately cancel the time-frequency interference from the first UE to the second UE based on the first signaling information.

In a possible implementation of the first aspect, the method further includes: obtaining a frequency domain position of the first UE. In this embodiment of this application, the frequency domain resource of the first UE is obtained, so that accuracy of cancelling the time-frequency interference from the first UE to the second UE is further improved.

In a possible implementation of the first aspect, the first signaling information includes the frequency domain position of the first UE relative to the second UE. In this embodiment of this application, frequency domain information of the first UE relative to the second UE is transferred by using the first signaling information, so that a calculation amount caused because the second UE obtains the frequency domain information of the first UE in a blind detection manner is reduced, and efficiency of cancelling, by the second UE, the time-frequency interference from the first UE to the second UE is improved.

In a possible implementation of the first aspect, the method further includes: obtaining time domain information of the first UE. In this embodiment of this application, a time domain position of the first UE is obtained, so that efficiency and the accuracy of cancelling the time-frequency interference from the first UE to the second UE are further improved.

According to a second aspect, an embodiment of this application provides an interference cancellation method. The method includes:
generating first signaling information, where the first signaling information includes a physical resource block bundling size PRB bundling size of a first user equipment UE and/or first information of the first UE, the first information indicates a number of demodulation reference signal code division multiplexing groups without data scheduling number of DMRS CDM groups without data or a ratio of DMRS EPRE to data EPRE, and the first UE is a paired UE of a second UE; and
sending the first signaling information to the second UE, to cancel time-frequency interference from the first UE to the second UE based on the first signaling information.

In a possible implementation of the second aspect, the first signaling information includes a port number of the first UE and a modulation index of the first UE.

In a possible implementation of the second aspect, the method further includes: sending a frequency domain position of the first UE to the second UE.

In a possible implementation of the second aspect, the first signaling information includes the frequency domain position of the first UE relative to the second UE.

According to a third aspect, an embodiment of this application provides a second user equipment. The second user equipment includes:
an obtaining unit, configured to obtain first signaling information, where the first signaling information includes a physical resource block bundling size PRB bundling size of a first user equipment UE and/or first information of the first UE, and the first information indicates a number of demodulation reference signal code division multiplexing groups without data scheduling number of DMRS CDM groups without data or a ratio of DMRS EPRE to data EPRE; and
a calculation unit, configured to cancel time-frequency interference from the first UE to the second UE based on the first signaling information, where the first UE is a paired UE of the second UE.

In a possible implementation of the third aspect, if the first signaling information does not include the first information,
the calculation unit is specifically configured to cancel the time-frequency interference from the first UE to the second UE based on the PRB bundling size of the first UE and first information of the second UE.

In a possible implementation of the third aspect, the first information of the first UE is the same as the first information of the second UE.

In a possible implementation of the third aspect, if the first signaling information does not include the PRB bundling size of the first UE,
the calculation unit is specifically configured to cancel the time-frequency interference from the first UE to the second UE based on the first information and a PRB bundling size of the second UE.

In a possible implementation of the third aspect, the first signaling information includes a port number of the first UE and a modulation index of the first UE.

In a possible implementation of the third aspect, the obtaining unit is further configured to obtain a frequency domain position of the first UE.

In a possible implementation of the third aspect, the first signaling information includes the frequency domain position of the first UE relative to the second UE.

According to a fourth aspect, an embodiment of this application provides a base station. The base station includes:
a generation unit, configured to generate first signaling information, where the first signaling information includes a physical resource block bundling size PRB bundling size of a first user equipment UE and/or first information of the first UE, the first information indicates a number of demodulation reference signal code division multiplexing groups without data scheduling number of DMRS CDM groups without data or a ratio of DMRS EPRE to data EPRE, and the first UE is a paired UE of a second UE; and
a sending unit, configured to send the first signaling information to the second UE, to cancel time-frequency interference from the first UE to the second UE based on the first signaling information.

In a possible implementation of the fourth aspect, the first signaling information includes a port number of the first UE and a modulation index of the first UE.

In a possible implementation of the fourth aspect, the base station further includes: sending a frequency domain position of the first UE to the second UE.

In a possible implementation of the fourth aspect, the first signaling information includes the frequency domain position of the first UE relative to the second UE.

According to a fifth aspect, an embodiment of this application provides a second user equipment. The second user equipment includes a processor and a memory, where the memory is configured to store instructions, the processor is configured to execute the instructions, and when executing the instructions, the processor performs the method according to any one of the first aspect or the implementations of the first aspect.

According to a sixth aspect, an embodiment of this application provides a base station. The base station includes a processor and a memory, where the memory is configured to store instructions, the processor is configured to execute the instructions, and when executing the instructions, the processor performs the method according to any one of the second aspect or the implementations of the second aspect.

According to a seventh aspect, an embodiment of this application provides a system. The system includes a first user equipment UE, a second UE, and a base station. The base station is separately connected to the first UE and the second UE in a communicable manner. The second UE performs the method according to any one of the first aspect or the implementations of the first aspect, and the base station performs the method according to any one of the second aspect or the implementations of the second aspect.

According to an eighth aspect, an embodiment of this application provides a computer-readable storage medium. The computer-readable storage medium includes instructions. When the instructions are run on a computer, the computer is enabled to perform the method according to the first aspect or the implementations of the first aspect.

According to a ninth aspect, an embodiment of this application provides a computer-readable storage medium. The computer-readable storage medium includes instructions. When the instructions are run on a computer, the computer is enabled to perform the method according to the second aspect or the implementations of the second aspect.

### BRIEF DESCRIPTION OF DRAWINGS

FIG. 1 is a signaling flowchart of an interference cancellation method according to an embodiment of this application;
FIG. 2 is a diagram of first signaling information according to an embodiment of this application;
FIG. 3 is another diagram of first signaling information according to an embodiment of this application;
FIG. 4 is another diagram of first signaling information according to an embodiment of this application;
FIG. 5 is another diagram of first signaling information according to an embodiment of this application;
FIG. 6 is a diagram of a structure of a second UE according to an embodiment of this application;
FIG. 7 is a diagram of a structure a base station according to an embodiment of this application;
FIG. 8 is a diagram of another structure of a second UE according to an embodiment of this application;
FIG. 9 is a diagram of another structure of a base station according to an embodiment of this application; and
FIG. 10 shows an interference cancellation system according to an embodiment of this application.

### DESCRIPTION OF EMBODIMENTS

The following describes embodiments of this application with reference to the accompanying drawings. A person of ordinary skill in the art may learn that, with development of technologies and emergence of a new scenario, the technical solutions provided in embodiments of this application are also applicable to a similar technical problem.

In the specification, claims, and accompanying drawings of this application, terms "first", "second", and so on are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, product, or device.

In a MU-MIMO technology generated to improve utilization efficiency of a base station in a wireless communication technology, a plurality of UEs may occupy a same time-frequency domain resource, and the plurality of UEs that occupy the same time-frequency domain resource are referred to as paired UEs. To cancel time-frequency interference between the paired UEs, in a network assisted interference cancellation and suppression (NAICS) scenario in a long term evolution network (long term evolution, LTE), a serving UE obtains, from the base station, information about a scrambling code ID of a pilot sequence, a port number, and a modulation order that are of a paired UE, and interference from the paired UE to the serving UE is cancelled by using the scrambling code ID of the pilot sequence, the port number, and the information about the modulation order that are of the paired UE.

In different application scenarios, how to more efficiently cancel time-frequency interference between user equipments becomes a problem that a skilled person needs to face.

This application proposes that at least one of a PRB bundling size and first information of a paired UE is obtained from a base station by using downlink control information (downlink control information, DCI). The first information indicates a number of DMRS CDM groups without data of the paired UE or a ratio of DMRS EPRE of the paired UE to data EPRE of the paired UE. A serving UE may cancel time-frequency interference from the paired UE to the serving UE by using the PRB bundling size and the first information of the paired UE. In this way, efficiency of cancelling the time-frequency interference from the paired UE to the serving UE is further improved.

With reference to the accompanying drawings, the following describes an interference cancellation method provided in embodiments of this application.

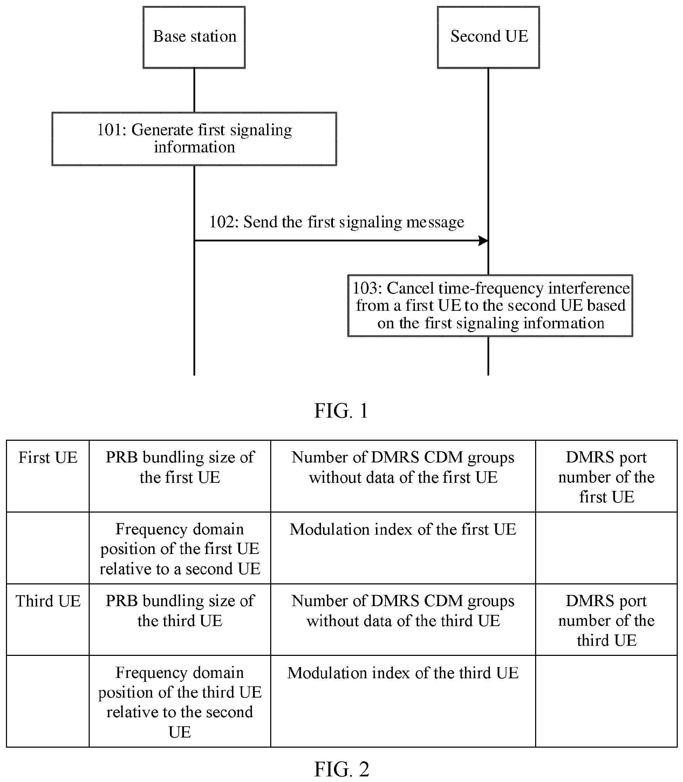

FIG. 1 is a signaling flowchart of an interference cancellation method according to an embodiment of this application.

101: A base station generates first signaling information.

The base station generates the first signaling information based on a pairing relationship between a first UE and a second UE. The first signaling information includes a PRB bundling size of the first UE and/or first information of the first UE, and the first information indicates a number of DMRS CDM groups without data and a ratio of DMRS EPRE to data EPRE. The data is data whose transmission is performed on a physical downlink data shared channel (physical downlink shared channel, PDSCH).

Specific content of the first signaling information varies based on different relationships between the first UE and the second UE. The following separately describes the content of the first signaling information.
1. The first UE is a paired UE of the second UE.

When the first UE is a paired UE of the second UE, the first signaling information includes the PRB bundling size of the first UE and/or the first information of the first UE, and the first information indicates the number of DMRS CDM groups without data or the ratio of the DMRS EPRE to the data EPRE.

Optionally, the first signaling information may further include at least one of a port number of the first UE, a frequency domain position of the first UE relative to the second UE, and a modulation index of the first UE.

It may be understood that the frequency domain of the first UE relative to the second UE may alternatively be frequency domain of the first UE. This is not limited herein.

For example, for a format of the first signaling information, refer to FIG. 2. FIG. 2 is a diagram of first signaling information according to an embodiment of this application.

In FIG. 2, the content and the format of the first signaling information are described by using an example in which the first UE and a third UE are paired UEs of the second UE. The first signaling information includes related information about the first UE and related information about the third UE. The related information about the first UE includes: the PRB bundling size of the first UE, the number of DMRS CDM groups without data of the first UE, the DMRS port number of the first UE, the frequency domain position of the first UE relative to the second UE, and the modulation index of the first UE. The related information about the third UE includes: a PRB bundling size of the third UE, a number of DMRS CDM groups without data of the third UE, a DMRS port number of the third UE, a frequency domain position of the third UE relative to the second UE, and a modulation index of the third UE.

It may be understood that both the content included in the first signaling information and a specific representation form of the first signaling information herein are examples. During actual application, the first signaling information may include related information about at least one UE, or may include related information about a plurality of UEs when first signaling overheads permit. During actual application, adjustment may be performed with reference to a specific application scenario. This is not limited herein.
2. The first UE is a paired UE of the second UE, the first UE and the second UE are scheduled in a same CDM group, and a PRB bundling size of the second UE is 2 or 4.

When the first UE is a paired UE of the second UE, the first UE and the second UE are scheduled in the same CDM group, and the PRB bundling size of the second UE is 2 or 4, the first signaling information includes the first information of the first UE, and the first information indicates the number of DMRS CDM groups without data or the ratio of the DMRS EPRE to the data EPRE.

Optionally, the first signaling information may further include at least one of a port number of the first UE, a frequency domain position of the first UE relative to the second UE, and a modulation index of the first UE.

It may be understood that the frequency domain of the first UE relative to the second UE may alternatively be frequency domain of the first UE. This is not limited herein.

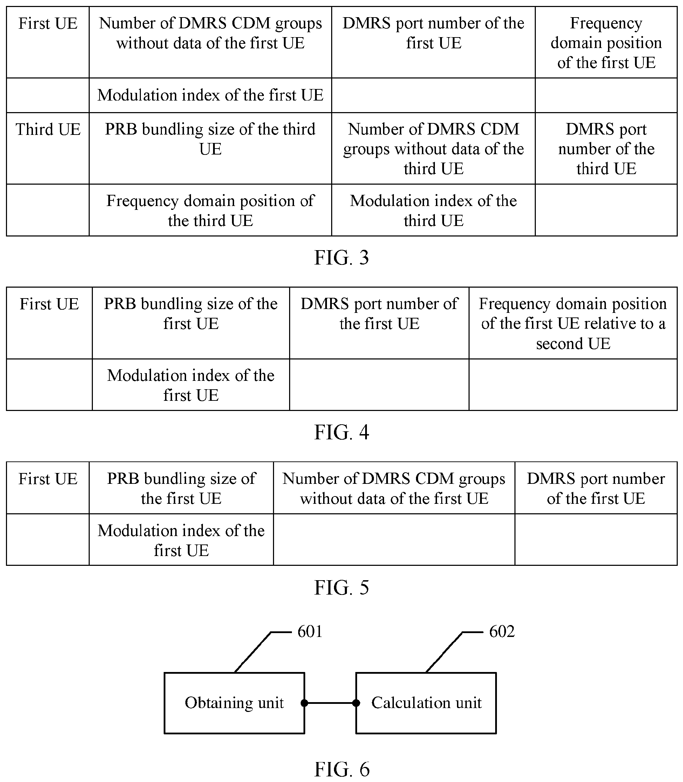

For example, for a format of the first signaling information, refer to FIG. 3. FIG. 3 is another diagram of first signaling information according to an embodiment of this application.

In FIG. 3, the content and the format of the first signaling information are described by using an example in which the first UE and a third UE are paired UEs of the second UE, the first UE and the second UE are scheduled in the same CDM group, and the PRB bundling size of the second UE is 2 or 4. The first signaling information includes related information about the first UE and related information about the third UE. The related information about the first UE includes: the number of DMRS CDM groups without data of the first UE, the DMRS port number of the first UE, the frequency domain position of the first UE, and the modulation index of the first UE. The related information about the third UE includes: a PRB bundling size of the third UE, a number of DMRS CDM groups without data of the third UE, a DMRS port number of the third UE, a frequency domain position of the third UE, and a modulation index of the third UE.

It may be understood that both the content included in the first signaling information and a specific representation form of the first signaling information herein are examples. During actual application, the first signaling information may include related information about at least one UE, or may include related information about a plurality of UEs when first signaling overheads permit. During actual application, adjustment may be performed with reference to a specific application scenario. This is not limited herein.

In this embodiment of this application, it is proposed that, in the first signaling information, the first UE and the second UE are scheduled in the same CDM group, and the PRB bundling size of the second UE is 2 or 4. In this way, the PRB bundling size of the first UE does not need to be carried, so that signaling overheads can be reduced and signaling transmission efficiency can be improved.
3. The first UE is a paired UE of the second UE, and the first information of the first UE is the same as first information of the second UE.

When the first UE is a paired UE of the second UE, and the first information of the first UE is the same as the first information of the second UE, the first signaling information includes the PRB bundling size of the first UE.

Optionally, the first signaling information may further include at least one of a port number of the first UE, a frequency domain position of the first UE relative to the second UE, and a modulation index of the first UE.

It may be understood that the frequency domain of the first UE relative to the second UE may alternatively be frequency domain of the first UE. This is not limited herein.

For example, for a format of the first signaling information, refer to FIG. 4. FIG. 4 is another diagram of first signaling information according to an embodiment of this application.

In FIG. 4, the content and the format of the first signaling information are described by using an example in which the first UE is a paired UE of the second UE. The first signaling information includes the PRB bundling size of the first UE, the DMRS port number of the first UE, the frequency domain position of the first UE, and the modulation index of the first UE.

It may be understood that both the content included in the first signaling information and a specific representation form of the first signaling information herein are examples. During actual application, the first signaling information may include related information about at least one UE, or may include related information about a plurality of UEs when first signaling overheads permit. During actual application, adjustment may be performed with reference to a specific application scenario. This is not limited herein.

In this embodiment of this application, when the first information of the first UE is the same as the first information of the second UE, the first signaling information includes the PRB bundling size of the first UE, and the second UE may cancel time-frequency interference from the first UE to the second UE by using the first information of the second UE. This reduces signaling overheads and improves signaling transmission efficiency.
4. The first UE and a third UE are paired UEs of the second UE, and a port of the first UE is the same as a port of the third UE.

When the first UE and the third UE are paired UEs of the second UE, and the port of the first UE is the same as the port of the third UE, because the PRB bundling size of the first UE is the same as a PRB bundling size of the third UE, and the first information of the first UE is the same as first information of the third UE, the first signaling information may include related information about the first UE that is the same as related information about the third UE.

Optionally, the first signaling information may further include at least one of a port number of the first UE and a modulation index of the first UE.

For example, for the content of the first signaling information, refer to FIG. 5. FIG. 5 is another diagram of first signaling information according to an embodiment of this application.

In FIG. 5, the content and a format of the first signaling information are described by using an example in which the first UE and the third UE are paired UEs of the second UE. Because the port of the first UE is the same as the port of the third UE, and related information about the first UE is partially the same as related information about the third UE, the first signaling information includes a same part that is in the related information about the first UE and that is the same as the related information about the third UE. Specifically, the first signaling information includes the DMRS port number of the first UE, the PRB bundling size of the first UE, the number of DMRS CDM groups without data of the first UE, and the modulation index of the first UE.

It may be understood that both the content included in the first signaling information and a specific representation form of the first signaling information herein are examples. During actual application, the first signaling information may include related information about at least one UE, or may include related information about a plurality of UEs when first signaling overheads permit. During actual application, adjustment may be performed with reference to a specific application scenario. This is not limited herein.

It should be noted that descriptions of transfer content in the first signaling information in FIG. 5 are merely examples. This embodiment of this application is intended to describe when the port of the first UE is the same as the port of the third UE, information in the first signaling information is transferred at a port granularity. The first signaling information may include the part that is in the related information about the first UE and that is the same as the related information about the third UE, or may include the related information about the first UE or the related information about the third UE. Related information about a plurality of paired UEs corresponding to the port is repeatedly sent. A specific representation form is not limited herein.

In this embodiment of this application, because the first UE and the third UE that have a same port have same related information, the first signaling information includes the same part in the related information about the first UE or the related information about the third UE, and does not carry repeated content. When a number of paired UEs is relatively large, signaling overheads can be reduced, and signaling transmission efficiency can be improved.

102: The base station sends the first signaling information to the second UE.

After generating the first signaling information, the base station sends the first signaling information to the second UE.

Optionally, the first signaling information may be transferred by using DCI.

It should be noted that descriptions of a manner of transferring the first signaling information herein are merely examples. During actual application, the manner of transferring the first signaling information should be set with reference to a specific application scenario. This is not limited herein.

103: The second UE cancels the time-frequency interference from the first UE to the second UE based on the first signaling information.

After obtaining the first signaling information sent by the base station, the second UE cancels the time-frequency interference from the first UE to the second UE based on the first signaling information.

A method used by the second UE to cancel the time-frequency interference from the first UE to the second UE based on the first signaling information varies based on different content of the first signaling information. The following provides descriptions with reference to different content of the first signaling information.
a. The first signaling information includes the PRB bundling size of the first UE and the first information of the first UE.

When the first signaling information includes the PRB bundling size of the first UE and the first information of the first UE, the second UE inputs the first signaling information into a minimum mean square error (minimum mean square error, MMSE) receiver or a maximum likelihood (maximum likelihood, ML) receiver for calculation, to cancel the time-frequency interference from the first UE to the second UE, where the first signaling information includes the PRB bundling size of the first UE and the first information of the first UE.

Optionally, the first signaling information may further include at least one of the port number of the first UE, the frequency domain position of the first UE relative to the second UE, and the modulation index of the first UE.The frequency domain of the first UE relative to the second UE may alternatively be the frequency domain of the first UE. This is not limited herein.

b. The first signaling information includes the first information of the first UE.

When the first signaling information includes the first information of the first UE, the first UE and the second UE are scheduled in the same CDM group. Therefore, the PRB bundling size of the first UE is the same as the PRB bundling size of the second UE. The second UE inputs the first signaling information into an MMSE receiver or an ML receiver for calculation, to cancel the time-frequency interference from the first UE to the second UE, where the first signaling information includes the first information of the first UE and the PRB bundling size of the second UE.

Optionally, the first signaling information may further include at least one of the port number of the first UE, the frequency domain position of the first UE relative to the second UE, and the modulation index of the first UE. The frequency domain of the first UE relative to the second UE may alternatively be the frequency domain of the first UE. This is not limited herein.
c. The first signaling information includes the PRB bundling size of the first UE.

When the first signaling information includes the PRB bundling size of the first UE, the second UE considers by default that the first information of the first UE is the same as the first information of the second UE, and inputs the first signaling information into an MMSE receiver or an ML receiver for calculation, to cancel the time-frequency interference from the first UE to the second UE, where the first signaling information includes the PRB bundling size of the first UE and the first information of the second UE.

Optionally, the first signaling information may further include at least one of the port number of the first UE, the frequency domain position of the first UE relative to the second UE, and the modulation index of the first UE. The frequency domain of the first UE relative to the second UE may alternatively be the frequency domain of the first UE. This is not limited herein.

It should be noted that the method for cancelling the interference from the first UE to the second UE based on the first signaling information herein is merely an example. During actual application, the interference may be cancelled in combination with another manner. This is not limited herein.

In this embodiment of this application, the base station generates and sends the first signaling information to the second UE, and the second UE cancels the time-frequency interference from the first UE to the second UE based on the first signaling information, where the first signaling information includes the PRB bundling size of the first UE and/or the first information of the first UE, and the first information of the first UE indicates the number of DMRS CDM groups without data of the first UE or the ratio of the DMRS EPRE of the first UE to the data EPRE of the first UE. The second UE learns of a precoding granularity of the first UE by using the PRB bundling size of the first UE, and may cancel the time-frequency interference from the first UE to the second UE at a precoding granularity as large as possible, so that efficiency of cancelling the time-frequency interference from the first UE to the second UE is improved; and/or, the second UE uses the first information of the first UE to help calculate an actual channel coefficient of the first UE, to avoid a case in which the second UE cannot accurately estimate the channel coefficient of the first UE, so that efficiency of cancelling the time-frequency interference from the first UE to the second UE is improved.

The foregoing describes the interference cancellation method provided in embodiments of this application. The following describes, with reference to the accompanying drawings, a second UE, a base station, an interference cancellation system, and a readable and writable storage medium that are provided in embodiments of this application.

FIG. 6 is a diagram of a structure of a second UE according to an embodiment of this application.

The second UE includes:
an obtaining unit 601, configured to obtain first signaling information, where the first signaling information includes a physical resource block bundling size PRB bundling size of a first user equipment UE and/or first information of the first UE, and the first information indicates a number of demodulation reference signal code division multiplexing groups without data scheduling number of DMRS CDM groups without data or a ratio of DMRS EPRE to data EPRE; and
a calculation unit 602: configured to cancel time-frequency interference from the first UE to the second UE based on the first signaling information, where the first UE is a paired UE of the second UE.

Optionally, if the first signaling information does not include the first information,
the calculation unit 602 is specifically configured to cancel the time-frequency interference from the first UE to the second UE based on the PRB bundling size of the first UE and first information of the second UE.

Optionally, the first information of the first UE is the same as the first information of the second UE.

Optionally, if the first signaling information does not include the PRB bundling size of the first UE,
the calculation unit 602 is specifically configured to cancel the time-frequency interference from the first UE to the second UE based on the first information and a PRB bundling size of the second UE.

Optionally, the first signaling information includes a port number of the first UE and a modulation index of the first UE.

Optionally, the obtaining unit 601 is further configured to obtain a frequency domain position of the first UE.

Optionally, the first signaling information includes the frequency domain position of the first UE relative to the second UE.

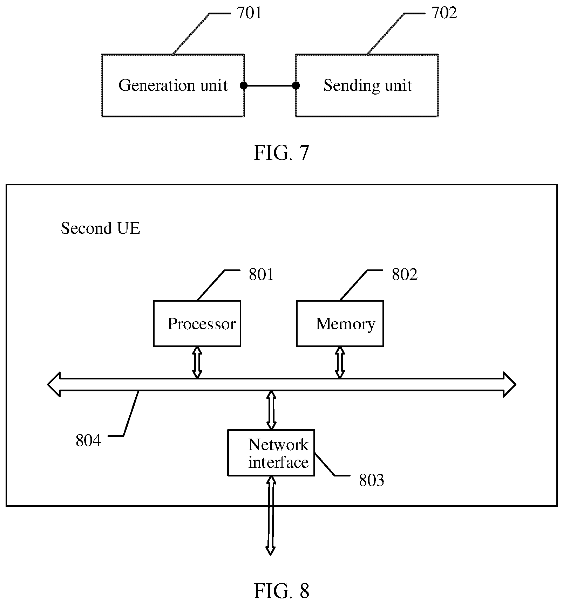

FIG. 7 is a diagram of a structure a base station according to an embodiment of this application.

The base station includes:
a generation unit 701, configured to generate first signaling information, where the first signaling information includes a physical resource block bundling size PRB bundling size of a first user equipment UE and/or first information of the first UE, the first information indicates a number of demodulation reference signal code division multiplexing groups without data scheduling number of DMRS CDM groups without data or a ratio of DMRS EPRE to data EPRE, and the first UE is a paired UE of a second UE; and
a sending unit 702, configured to send the first signaling information to the second UE, to cancel time-frequency interference from the first UE to the second UE based on the first signaling information.

Optionally, the first signaling information includes a port number of the first UE and a modulation index of the first UE.

Optionally, the sending unit 702 is further configured to send a frequency domain position of the first UE to the second UE.

Optionally, the first signaling information includes the frequency domain position of the first UE relative to the second UE.

FIG. 8 is a diagram of a structure of a second UE according to an embodiment of this application. The second UE includes a processor 801, a memory 802, a network interface 803, and a bus system 804.

The bus system 804 is configured to couple all hardware components of a source node together.

The network interface 803 is configured to implement a communication connection between the source node and at least one other network element by using the Internet, a wide area network, a local network, a metropolitan area network, or the like.

The memory 802 is configured to store program instructions and data.

The processor 801 is configured to read the instructions and the data stored in the memory 802, to perform functions and procedures performed by the second UE in FIG. 1. Details are not described herein again.

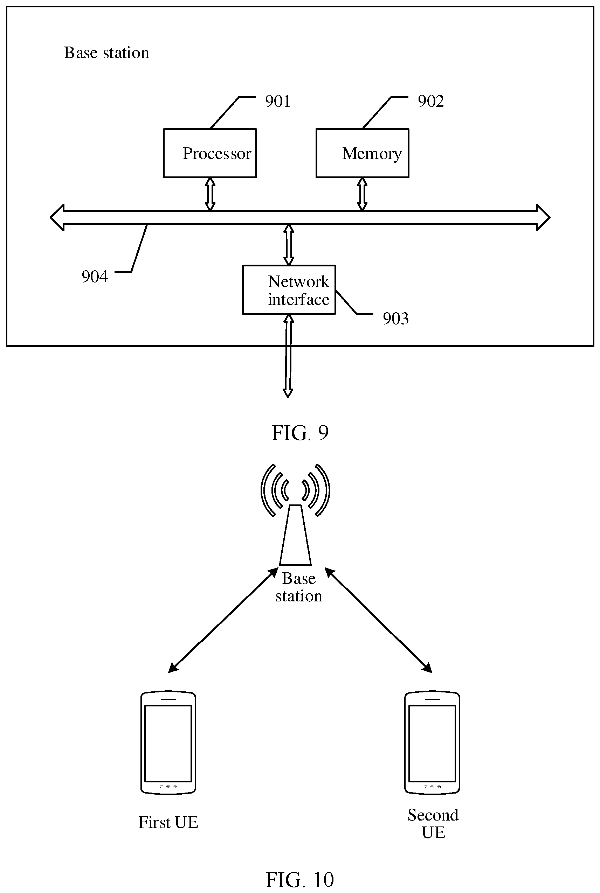

FIG. 9 is a diagram of a structure a base station according to an embodiment of this application. The base station includes a processor 901, a memory 902, a network interface 903, and a bus system 904.

The bus system 904 is configured to couple all hardware components of a source node together.

The network interface 903 is configured to implement a communication connection between the source node and at least one other network element by using the Internet, a wide area network, a local network, a metropolitan area network, or the like.

The memory 902 is configured to store program instructions and data.

The processor 901 is configured to read the instructions and the data stored in the memory 902, to perform functions and procedures performed by the base station in FIG. 1. Details are not described herein again.

FIG. 10 shows an interference cancellation system according to an embodiment of this application. The system includes a first user equipment UE, a second UE, and a base station, where the base station is separately connected to the first UE and the second UE in a communicable manner.

The second UE performs the method performed by the second UE in FIG. 1.

The base station performs the method performed by the base station in FIG. 1.

An embodiment of this application further provides a computer-readable storage medium. The computer-readable storage medium includes instructions. When the instructions are run on a computer, the computer is enabled to perform the method performed by the second UE in FIG. 1.

An embodiment of this application further provides a computer-readable storage medium. The computer-readable storage medium includes instructions. When the instructions are run on a computer, the computer is enabled to perform the method performed by the base station in FIG. 1.

It may be clearly understood by a person skilled in the art that, for the purpose of convenient and brief description, for a detailed working process of the foregoing system, apparatus, and unit, refer to a corresponding process in the foregoing method embodiment, and details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, a network device, or the like) to perform all or some of the steps of the method described in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

## Claims

1. An interference cancellation method, comprising:
obtaining first signaling information, wherein the first signaling information comprises a physical resource block bundling size of a first user equipment UE and/or first information of the first UE, and the first information indicates a number of demodulation reference signal code division multiplexing groups without data scheduling or a ratio of demodulation reference signal DMRS EPRE to data EPRE; and
cancelling time-frequency interference from the first UE to a second UE based on the first signaling information, wherein the first UE is a paired UE of the second UE.

2. The method according to claim 1, wherein if the first signaling information does not comprise the first information, the cancelling time-frequency interference from the first UE to a second UE based on the first signaling information comprises:
cancelling time-frequency interference from the first UE to the second UE based on the physical resource block bundling size of the first UE and first information of the second UE.

3. The method according to claim 1 or 2, wherein the first information of the first UE is the same as the first information of the second UE.

4. The method according to any one of claims 1 to 3, wherein if the first signaling information does not comprise the physical resource block bundling size of the first UE, the cancelling time-frequency interference from the first UE to a second UE based on the first signaling information comprises:
cancelling the time-frequency interference from the first UE to the second UE based on the first information and a physical resource block bundling size of the second UE.

5. The method according to any one of claims 1 to 4, wherein the first signaling information comprises a port number of the first UE and a modulation index of the first UE.

6. The method according to any one of claims 1 to 5, wherein the method further comprises: obtaining a frequency domain position of the first UE.

7. The method according to any one of claims 1 to 6, wherein the first signaling information comprises the frequency domain position of the first UE relative to the second UE.

8. An interference cancellation method, comprising:
generating first signaling information, wherein the first signaling information comprises a physical resource block bundling size of a first user equipment UE and/or first information of the first UE, the first information indicates a number of demodulation reference signal code division multiplexing groups without data scheduling or a ratio of DMRS EPRE to data EPRE, and the first UE is a paired UE of the second UE; and
sending the first signaling information to the second UE, to cancel time-frequency interference from the first UE to the second UE based on the first signaling information.

9. The method according to claim 8, wherein the first signaling information comprises a port number of the first UE and a modulation index of the first UE.

10. The method according to claim 8 or 9, wherein the method further comprises:
sending a frequency domain position of the first UE to the second UE.

11. The method according to any one of claims 8 to 10, wherein the first signaling information comprises the frequency domain position of the first UE relative to the second UE.

12. A second user equipment, comprising:
an obtaining unit, configured to obtain first signaling information, wherein the first signaling information comprises a physical resource block bundling size of a first user equipment UE and/or first information of the first UE, and the first information indicates a number of demodulation reference signal code division multiplexing groups without data scheduling or a ratio of DMRS EPRE to data EPRE; and
a calculation unit, configured to cancel time-frequency interference from the first UE to the second UE based on the first signaling information, wherein the first UE is a paired UE of the second UE.

13. The second user equipment according to claim 12, wherein if the first signaling information does not comprise the first information,
the calculation unit is specifically configured to cancel time-frequency interference from the first UE to the second UE based on the physical resource block bundling size of the first UE and first information of the second UE.

14. The second user equipment according to claim 12 or 13, wherein the first information of the first UE is the same as the first information of the second UE.

15. The second user equipment according to any one of claims 12 to 14, wherein if the first signaling information does not comprise the physical resource block bundling size of the first UE,
the calculation unit is specifically configured to cancel the time-frequency interference from the first UE to the second UE based on the first information and a physical resource block bundling size of the second UE.

16. The second user equipment according to any one of claims 12 to 15, wherein the first signaling information comprises a port number of the first UE and a modulation index of the first UE.

17. The second user equipment according to any one of claims 12 to 16, wherein the obtaining unit is further configured to obtain a frequency domain position of the first UE.

18. The second user equipment according to any one of claims 12 to 17, wherein the first signaling information comprises the frequency domain position of the first UE relative to the second UE.

19. A base station, comprising:
a generation unit, configured to generate first signaling information, wherein the first signaling information comprises a physical resource block bundling size of a first user equipment UE and/or first information of the first UE, the first information indicates a number of demodulation reference signal code division multiplexing groups without data scheduling or a ratio of DMRS EPRE to data EPRE, and the first UE is a paired UE of the second UE; and
a sending unit, configured to send the first signaling information to the second UE, to cancel time-frequency interference from the first UE to the second UE based on the first signaling information.

20. The base station according to claim 19, wherein the first signaling information comprises a port number of the first UE and a modulation index of the first UE.

21. The base station according to claim 19 or 20, wherein the sending unit is further configured to send a frequency domain position of the first UE to the second UE.

22. The base station according to any one of claims 19 to 21, wherein the first signaling information comprises the frequency domain position of the first UE relative to the second UE.

23. A second user equipment, comprising a processor and a memory, wherein the memory is configured to store instructions, the processor is configured to execute the instructions, and when executing the instructions, the processor performs the method according to any one of claims 1 to 7.

24. A base station, comprising a processor and a memory, wherein the memory is configured to store instructions, the processor is configured to execute the instructions, and when executing the instructions, the processor performs the method according to any one of claims 8 to 11.

25. An interference cancellation system, comprising a first user equipment UE, a second UE, and a base station, wherein the base station is separately connected to the first UE and the second UE in a communicable manner;
the second UE performs the method according to any one of claims 1 to 7; and
the base station performs the method according to any one of claims 8 to 11.

26. A computer-readable storage medium, comprising instructions, wherein
when the instructions are run on a computer, the computer is enabled to perform the method according to any one of claims 1 to 7.

27. A computer-readable storage medium, comprising instructions, wherein when the instructions are run on a computer, the computer is enabled to perform the method according to any one of claims 8 to 11.
